# FASCICULE DE BREVET EUROPEEN

(11) **EP 2 900 506 B1**
(45) Date de publication et mention de la délivrance du brevet: **15.08.2018**
(21) Numéro de dépôt: 13782724.2
(22) Date de dépôt: 20.09.2013
(51) Int. Cl.: B60K 6/387, B60K 6/405, B60K 6/26, B60K 6/48, H02K 3/28, H02K 3/52

(54) **ENSEMBLE DE TRANSMISSION POUR VEHICULE AUTOMOBILE**
GETRIEBEANORDNUNG FÜR EIN KRAFTFAHRZEUG
TRANSMISSION ASSEMBLY FOR A MOTOR VEHICLE

(30) Priorité: 25.09.2012 FR 1258978; 22.05.2013 FR 1354598
(43) Date de publication de la demande: 05.08.2015
(73) Titulaire: Valeo Equipements Electriques Moteur, 94046 Créteil Cedex (FR)
(72) Inventeur: LEBEAU, Fabien, F-02100 Harly (FR); EL BARAKA, Khadija, F-77700 Serris (FR); JUGOVIC, Svetislav, F-91200 Athis-Mons (FR); CORNET, Vincent, F-80090 Amiens (FR); LEBAS, Gilles, F-80800 Villiers Betonneux (FR)
(74) Mandataire: Duprez, Richard
(86) Numéro de dépôt international: PCT/FR2013/052189
(87) Numéro de publication internationale: WO 2014/049248

(56) Documents cités:
- WO-A1-99/22955
- FR-A1- 2 778 441
- FR-A1- 2 829 538
- FR-A1- 2 881 587

## Description

### Domaine de l'invention

L'invention porte sur un ensemble de transmission pour véhicule automobile intercalé entre le moteur thermique et la boîte de vitesse du véhicule.

Elle concerne notamment un ensemble de transmission pour un véhicule automobile de type hybride dans lequel une machine électrique est disposée, dans la chaîne de transmission, entre le moteur et la boîte de vitesses.

### Etat de la technique

Il est connu des ensembles de transmission pour véhicule hybride destinés à être disposés entre le moteur à combustion du véhicule et la boîte de vitesse.

Un tel ensemble est par exemple décrit dans le document WO9922955. Ce document décrit un ensemble de transmission comportant une machine électrique rotative, un premier embrayage, côté boîte de vitesses, pour accoupler le rotor de la machine électrique à la transmission et un second embrayage, côté moteur, pour accoupler le rotor de la machine électrique au vilebrequin du moteur à combustion.

Un boîtier formé par deux demi-coques permet la fixation de l'ensemble, d'une part, sur la carter de la boîte de vitesses et, d'autre part, sur le carter du moteur thermique. Le boîtier comporte un anneau cylindrique coopérant avec la périphérie externe du stator afin d'assurer sa fixation. Par ailleurs, le boîtier est équipé d'un circuit de refroidissement du stator.

Dans le mode de réalisation des figures 1 et 2 du document WO9922955, le circuit de refroidissement est constitué par des rainures formées sur la périphérie interne de l'anneau cylindrique du boîtier et débouchant en vis-à-vis de la périphérie externe du stator. Des joints d'étanchéité sont disposés entre la périphérie interne de l'anneau cylindrique et la périphérie externe du stator afin d'assurer l'étanchéité du circuit de refroidissement. Un tel circuit de refroidissement n'est toutefois pas satisfaisant en ce que l'assemblage du stator et du boîtier est rendu complexe par la disposition des joints d'étanchéité et en ce que les joints d'étanchéité sont susceptible de se dégrader et nuisent ainsi à la fiabilité de l'étanchéité.

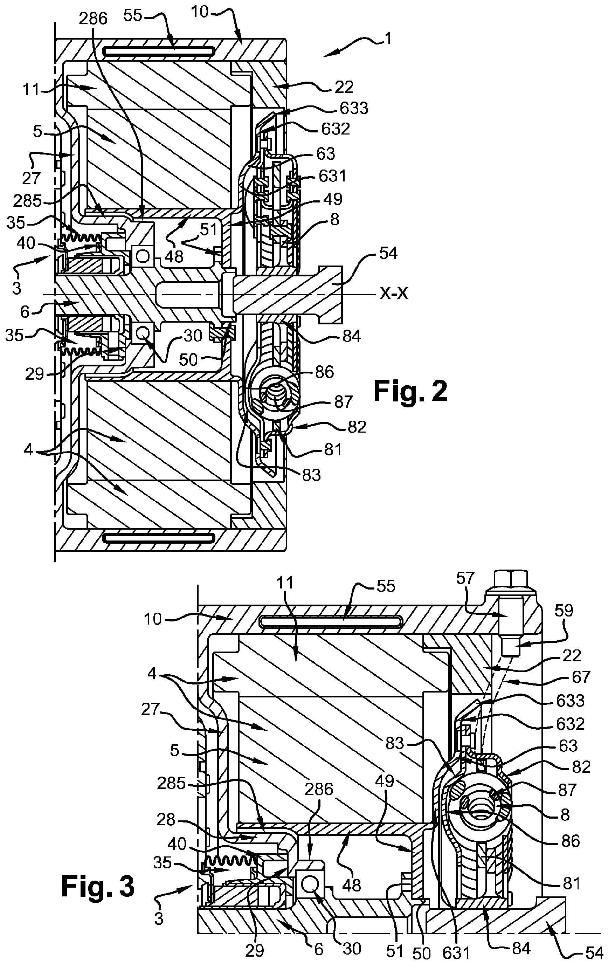

Dans le mode de réalisation de la figure 3, le circuit de refroidissement est formé par des rainures annulaires, formées en périphérie externe de l'anneau cylindrique supportant le stator, et recouvertes par une portion de l'autre demi-coque du boîtier. Là encore, des joints d'étanchéité sont disposés entre la périphérie externe de l'anneau cylindrique et la portion de l'autre demi coque du boîtier afin de garantir l'étanchéité du circuit de refroidissement. Ce mode de réalisation n'est pas non plus totalement satisfaisant, d'une part, en ce qu'il complexifie les opérations d'assemblage du boîtier et, d'autre part, en ce que l'étanchéité n'est pas assurée de manière fiable dans le temps.

### Objet de l'invention

Une idée à la base de l'invention est de proposer un ensemble de transmission comportant un circuit de refroidissement du stator et dont l'assemblage soit fiable et simple.

Pour ce faire, selon un mode de réalisation, l'invention propose un ensemble de transmission pour véhicule automobile, destiné à être disposé entre un moteur thermique et une boîte de vitesses, ledit ensemble comprenant :
- une machine électrique tournante comportant un stator externe présentant un corps et un rotor interne ;
- un embrayage à friction à sec comportant un mécanisme d'embrayage et un disque de friction,
- un volant moteur destiné à être fixé sur le vilebrequin du moteur thermique et configuré pour former un plateau de réaction de l'embrayage à sec;
- un arbre intermédiaire couplant en rotation le disque de friction de l'embrayage à friction à sec et le rotor de la machine électrique ; et
- un élément de support, monobloc, destiné à assurer la fixation de l'ensemble de transmission sur un carter de la boîte de vitesses et sur un carter du moteur thermique, et coiffant l'embrayage à friction à sec, l'élément de support présentant une périphérie interne de forme cylindrique coopérant avec le corps du stator par un ajustement serré; l'élément de support présentant un circuit de refroidissement pour refroidir le stator comportant un conduit annulaire associé à des orifices d'entrée et de sortie et présentant une section entourée par la matière de l'élément de support.

On entend par « conduit annulaire présentant une section entourée par la matière de l'élément de support », un conduit annulaire s'étendant à distance des surfaces intérieure et extérieure de l'élément de support. En d'autres termes, la section du conduit ne débouche pas sur les surfaces intérieures ou extérieures de l'élément support. Des joints d'étanchéité ne sont donc pas nécessaires pour assurer l'étanchéité du conduit annulaire.

Ainsi, l'élément de support étant monobloc et la section du conduit annulaire du circuit de refroidissement ne débouchant pas, en périphérie de l'élément de support, l'assemblage de l'ensemble de transmission, et notamment l'assemblage du stator sur l'élément de support par ajustement serré, peut être réalisé de manière simple tout en garantissant une fiabilité de l'étanchéité du circuit de refroidissement du stator.

Selon des modes de réalisation, un tel ensemble de transmission peut comporter une ou plusieurs des caractéristiques suivantes :
- l'élément de support est une pièce moulée et le conduit annulaire est noyé dans la masse de l'élément de support et formé par moulage à modèle perdue.
- le conduit annulaire est un tube et l'élément de support est une pièce surmoulée sur ledit tube.
- le corps du stator comporte un paquet de tôles fixé par frettage sur l'élément de support.
- l'élément de support est réalisé en aluminium ou en alliage à base d'aluminium. Ainsi, l'élément de support est amagnétique et peut être moulé aisément.
- l'élément de support comporte un voile interne de séparation entre la machine électrique et l'embrayage à friction et le voile présente à son extrémité interne un manchon axial pénétrant à l'intérieur du rotor de la machine électrique.
- l'ensemble comprend un dispositif de débrayage de l'embrayage à friction monté en partie à l'intérieur du manchon axial.
- l'ensemble comporte en outre un amortisseur de torsion qui est, d'une part, configuré pour être, lié en rotation à l'arbre d'entrée de la boîte de vitesses, en sortie de l'amortisseur de torsion, et d'autre part, couplé en rotation au rotor de la machine électrique.
- l'ensemble comporte un moyeu de support du rotor, d'une part, fixé à l'extrémité arrière de l'arbre intermédiaire et, d'autre part, à l'amortisseur de torsion.
- le volant moteur est un double volant amortisseur comportant un organe primaire et un organe secondaire coaxiaux mobiles en rotation l'un par rapport à l'autre et couplé par des moyens d'amortissement.

### Brève description des dessins.

L'invention sera mieux comprise à la lecture de la description qui va suivre et à l'examen des figures qui l'accompagnent. Cette description et ces figures ne sont données qu'à titre illustratif mais nullement limitatif de l'invention.
La figure 1 est une demi vue en coupe axiale de l'ensemble de transmission pour véhicule automobile selon l'invention faisant appel à un moyeu de support du rotor doté d'un rebord interne de fixation à l'arbre intermédiaire et à l'une des rondelles de guidage de l'amortisseur de torsion.
La figure 2 est une vue partielle en coupe axiale montrant la machine électrique tournante et réversible, ainsi que l'amortisseur de torsion et l'arbre intermédiaire de l'ensemble de transmission pour un second exemple de réalisation faisant appel à un moyeu de support du rotor muni d'un flasque anti poussière de protection de la machine électrique fixé à l'une des rondelles de guidage de l'amortisseur de torsion.
La figure 3 est une vue analogue à la figure 2 montrant une variante de la figure 2 à bouchon magnétique pour recueillir des particules métalliques provenant notamment de l'amortisseur de torsion.
La figure 4 est une vue en perspective montrant un mode de réalisation du stator de la machine électrique tournante réversible sous la forme d'un alterno-démarreur.
La figure 5 est une vue en perspective montrant une réalisation du canal de refroidissement du stator de la machine électrique en forme de tuyau.
Les figures 6 et 7 sont des vues partielles de l'une des tôles du paquet de tôles du rotor équipées d'aimants permanents pour deux modes de réalisation.
La figure 8 est une vue partielle de face du stator et du rotor de la machine électrique tournante pour encore un autre mode de réalisation.
La figure 9 est une vue en perspective de l'une des bobines de la figure 4 avec son isolant de bobine en position déployée avant montage sur la dent concernée du stator.
La figure 10 est une vue partielle à plus grand échelle de la figure 2.
La figure 11 est une vue en perspective du flasque anti poussière des figures 2 et 3.
La figure 12 est une vue en perspective du support du module hybride de l'ensemble de transmission selon l'invention montrant la face arrière de l'ensemble de transmission ainsi que l'extrémité du tuyau d'alimentation de la butée de débrayage à commande hydraulique et le bouchon magnétique de la figure 3.
La figure 13 est une vue analogue à la figure 12 pour une autre variante de réalisation du support du module hybride.
La figure 14 est une vue analogue à la figure 13 montrant la face avant de l'ensemble de transmission selon l'invention.
La figure 15 est une vue en perspective du bouchon magnétique de la figure 3.
La figure 16 est une vue en perspective de l'anneau de maintien de la butée de débrayage à commande hydraulique de la figure 1.

### Description d'exemples de réalisation de l'invention.

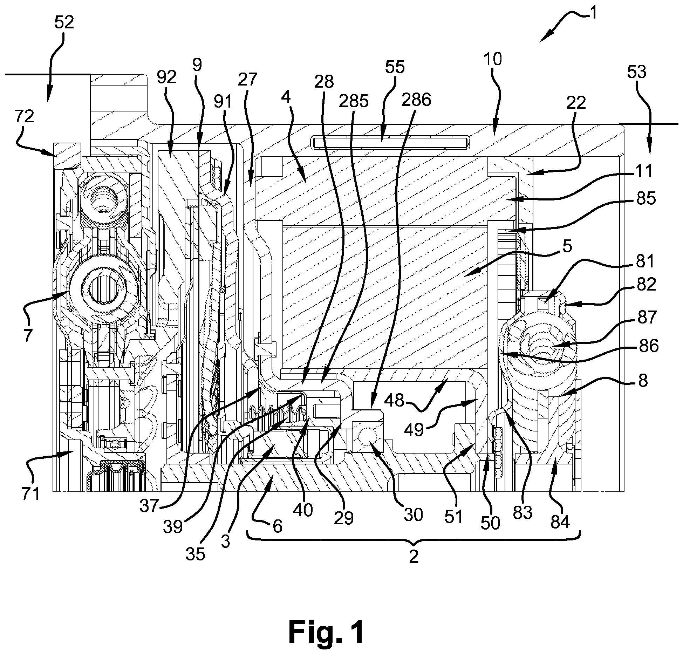

La figure 1 montre un ensemble de transmission 1 pour véhicule automobile intercalé entre la boîte de vitesse 53 et le moteur thermique 52 du véhicule automobile. Cet ensemble 1 comprend un embrayage 9, un dispositif de débrayage 3 de l'embrayage 9, une machine électrique tournante réversible 4 dotée d'un rotor 5 muni d'une ouverture centrale, un arbre intermédiaire 6 entre l'embrayage 9 et le rotor 5 de la machine électrique 4, ledit arbre portant le dispositif de débrayage 3 et pénétrant dans l'ouverture centrale du rotor 5. L'ensemble 1 est un ensemble de transmission de mouvement entre le vilebrequin du moteur thermique 52 et l'organe d'entrée de mouvement 54 de la boîte de vitesse 53.

L'axe X-X de l'arbre 6 constitue l'axe de rotation de l'ensemble 1. Les termes radial, axial et transversal sont à considérer par rapport à l'axe X-X. Les faces des pièces tournées en direction du moteur thermique 52 seront dites face avant, tandis que les faces des pièces tournées en direction de la boîte de vitesse 53 seront dites face arrière. L'extrémité avant d'une pièce est donc tournée vers le moteur 52, tandis que l'extrémité arrière d'une pièce est tournée vers la boîte de vitesse 53. Ainsi l'arbre intermédiaire 6 porte à l'avant le dispositif de débrayage 3 et à l'arrière, suivant une caractéristique, un amortisseur de torsion 8. La boîte de vitesse 53 est dans un mode de réalisation une boîte de vitesse automatique.

Dans un mode de réalisation la boîte automatique 53 comporte, de manière conventionnelle, des trains épicycloïdaux en cascade. En solidarisant par le biais d'embrayages ou de freins, certaines parties de ces trains, on obtient des rapports de transmission différents. La sélection d'un rapport dépend alors uniquement d'une combinaison d'ordre des pistons de commande. De ce fait, il n'y a aucun crabotage à piloter. Une pompe hydraulique haute pression, intégrée dans la boîte et entraînée directement par le moteur thermique, se charge de fournir l'énergie pour les actionneurs hydrauliques nécessaires aux embrayages et aux freins.

Les positions du sélecteur de vitesse sont repérées, de manière connue, par les initiales des termes anglais correspondants : P(ark) pour véhicule en stationnement, R(everse) pour marche arrière, N(eutral) pour point mort, D(rive) pour marche avant normal.

La boîte automatique comporte à l'entrée dans un mode de réalisation un convertisseur de couple.

L'organe d'entrée 54 de la boîte de vitesse est donc dans un mode de réalisation l'arbre d'entrée de la boîte de vitesse. En variante il consiste en un entraîneur relié, de manière connue, par des languettes élastiquement déformables au carter du convertisseur de couple portant la roue impulseur de celui-ci. En variante l'organe d'entrée 54 consiste en un entraîneur relié par une liaison à cannelures au carter du convertisseur de couple.

En variante la boîte de vitesse automatique est une transmission à variation continue (CVT), telle qu'une transmission comportant deux poulies variables et une courroie à plots intervenant entre les deux poulies.

En variante la boîte de vitesse automatique est une boîte de vitesse pilotée et robotisée, telle qu'une boîte à double embrayage comme décrit par exemple dans le brevet US 2011/0259698 auquel on se reportera.

Selon une caractéristique l'ensemble 1 de transmission de mouvement comprend un embrayage à friction à sec 9 doté d'un plateau de réaction 91.

Dans les réalisations l'embrayage 9 est un embrayage à friction, qui fonctionne à sec et l'ensemble de transmission 1 comporte, à l'avant, un double volant amortisseur 7 et, à l'arrière, un amortisseur de torsion 8. Le rotor 5 de la machine électrique 4 est fixé à l'amortisseur de torsion 8.

Plus précisément le double volant amortisseur 7 est configuré pour être fixé à l'avant sur le vilebrequin du moteur thermique du véhicule et pour former le plateau de réaction 91 de l'embrayage à friction à sec 9. L'amortisseur de torsion 8 est configuré pour être lié en rotation à l'organe d'entrée 54 de la boîte de vitesse 53. Dans la figure 1 l'organe 54 est l'arbre d'entrée de la boîte de vitesse automatique.

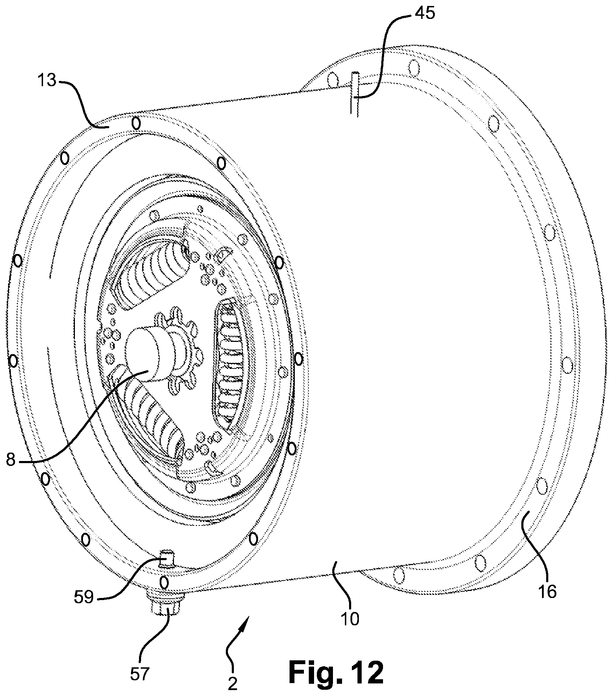

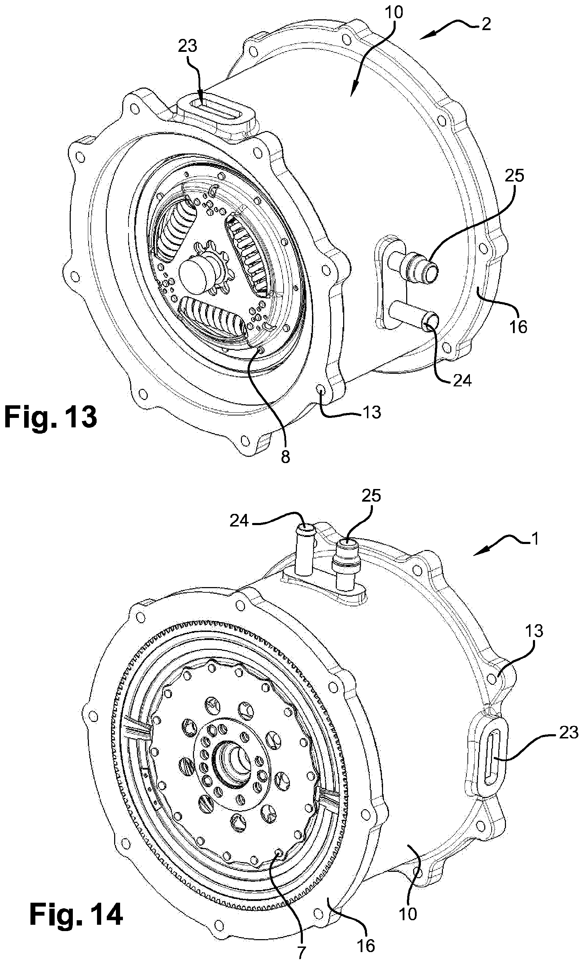

Dans les figures, l'amortisseur 8 comporte, de manière conventionnelle, au moins deux parties coaxiales montées mobiles l'une par rapport à l'autre à l'encontre de moyens élastiques à action circonférentielle, tels que des ressorts à boudins 87 mieux visibles dans les figures 12 et 13. L'une des parties coaxiales comporte un voile 81 et l'autre partie deux rondelles de guidage 82, 83 disposées de part et d'autre du voile 81. Les rondelles 82, 83 et le voile 81 sont métalliques de sorte que des particules métalliques peuvent se détacher et polluer la machine électrique 4. Des moyens de frottement pourront être prévus entre les deux parties coaxiales comme visible par exemple à la figure 1 du document DE 101 03 795. Des particules non métalliques pourront se détacher et polluer également la machine 4. Suivant une caractéristique des moyens anti poussière, tels que le flasque 63 des figures 2 et 3, sont prévus de manière décrite ci-après.

Le voile 81 est solidaire, de manière rigide dans les figures, d'un moyeu 84 cannelé intérieurement venant en prise avec des cannelures complémentaires que présente l'organe d'entrée 54 de la boîte de vitesse.

Suivant une caractéristique, la rondelle de guidage avant 83, la plus proche du rotor 5, est configurée, de manière décrite ci-après, pour être liée en rotation au rotor 5. Le voile 81 et les rondelles 81, 82 présentent des logements pour les organes élastiques. Dans les figures, le voile 81 présente des fenêtres pour le logement des organes élastiques 87, la rondelle de guidage 83 la plus proche du rotor 5, dite première rondelle de guidage, présente des crevés pour le logement des organes 87 et l'autre rondelle de guidage 82, dite deuxième rondelle de guidage présente des fenêtres de logement des organes 87. En variante la deuxième rondelle de guidage présente également des crevés. En variante la première rondelle 83 présente des fenêtres. On appréciera que les crevés empêchent les poussières de venir polluer le rotor 5. Dans les figures, la deuxième rondelle de guidage 82 présente des pattes périphériques d'orientation axiale s'étendant à l'extérieur du voile 81 pour son assemblage avec la première rondelle 83. Les pattes pourront être fixées par sertissage avec la première rondelle (Figure 1). En variante (Figures 2 et 3) les pattes présentent à leur extrémité libre un rebord radial pour fixation par rivetage avec la rondelle 83. Suivant une caractéristique les rivets permettent l'assemblage des rondelles avec le flasque 63.

La solution est économique car elle fait appel à un double volant amortisseur de torsion 7, à un embrayage à friction à sec 9 et à un amortisseur de torsion 8, qui pourront être des composants de grande série. En outre la taille radiale de la machine électrique tournante 4 pourra être réduite car elle est implantée axialement entre l'amortisseur 8 et l'ensemble double volant amortisseur de torsion 7- embrayage à friction 9, qui pourra être un embrayage conventionnel à diaphragme.

Pour mémoire un embrayage à diaphragme comporte un plateau de pression, un plateau de réaction, un disque de friction présentant à sa périphérie externe des garnitures de friction destinées à être serrées entre les plateaux de pression et de réaction sous l'action d'un diaphragme prenant appui sur un couvercle solidaire du plateau de pression. Le plateau de pression est lié au couvercle par des languettes tangentielles autorisant un mouvement axial du plateau de pression par rapport au couvercle. L'ensemble couvercle- plateau de pression- diaphragme est appelé mécanisme d'embrayage.

Le disque de friction, pourra appartenir à un amortisseur de torsion comprenant de manière précitée au moins, au moins deux partie coaxiales montées mobiles l'une par rapport à l'autre à l'encontre de moyens élastiques à action circonférentielle. L'une des parties coaxiales pourra comporter un voile et l'autre partie deux rondelles de guidage disposées de part et d'autre du voile. Le disque de friction pourra être solidaire par exemple de l'une des rondelles de guidage. Le voile pourra être solidaire d'un moyeu cannelé intérieurement pour être lié en rotation à l'arbre intermédiaire 6 présentant pour ce faire des cannelures complémentaires. Un tel amortisseur à moyens de frottement est visible est visible à la figure 1 du document DE 101 03 795

Dans le mode de réalisation de la figure 1 le disque de friction 93 pourra être rigide, c'est-à-dire ne pas présenter d'amortisseur de torsion. Ce disque 93 pourra présenter à sa périphérie externe des garnitures de friction (non référencées) disposées de part et d'autre du disque 93. Ce disque 93 pourra être configuré pour présenter à sa périphérie externe des portions élastiquement déformables pour serrage de manière progressive des garnitures de friction entre le plateau de réaction 92 et le plateau de pression appartenant au mécanisme d'embrayage 91. Le disque 93 pourra être fixé à sa périphérie interne, par exemple par rivetage, à un moyeu 94 en forme de L cannelé intérieurement pour être lié en rotation à l'arbre intermédiaire 6 présentant pour ce faire des cannelures complémentaires.

Le mécanisme d'embrayage 91 pourra être du type de celui décrit dans le document FR 2 473 140 auquel on se reportera. Ainsi le diaphragme présente une partie périphérique en forme de rondelle Belleville prolongée vers l'intérieur par une pluralité de doigts. Des moyens d'assemblage assujettissent de manière pivotante ledit diaphragme audit couvercle. Ces moyens, tels que des colonnettes ou des pattes traversent le diaphragme au niveau de la périphérie interne de la rondelle Belleville. Ces moyens portent un appui secondaire en regard d'un appui primaire tel qu'un embouti du couvercle ou un jonc. Ces moyens pourront comporter un dispositif de rattrapage d'usure comme décrit dans le document DE 101 03 795. Des languettes élastiquement déformables relient le couvercle au plateau de pression.

En résumé l'embrayage à friction 9 est un embrayage à diaphragme comprenant un plateau de réaction appartenant au double volant amortisseur et un mécanisme d'embrayage 91 comportant une première pièce globalement annulaire, dite couvercle, une deuxième pièce globalement annulaire, dite diaphragme, qui présente une partie périphérique formant rondelle Belleville et une partie centrale fragmentée en doigts radiaux, des moyens d'assemblage assujettissant de manière pivotante ledit diaphragme audit couvercle, et une troisième pièce annulaire, dite plateau de pression, qui est solidaire en rotation du couvercle tout en étant mobile axialement par rapport à celui-ci, et sur lequel porte le diaphragme par sa partie périphérique formant rondelle Belleville.

Par son couvercle, un tel mécanisme d'embrayage est adapté à être rapporté sur le plateau de réaction du double volant amortisseur 7 avec insertion, entre ce plateau de réaction et le plateau de pression, d'un disque de friction, solidaire en rotation de manière rigide ou élastique de l'arbre intermédiaire 6.

Un dispositif de débrayage 3 est apte à agir sur les doigts radiaux du diaphragme, pour commande en dégagement de l'embrayage, qui est normalement engagé, le plateau de pression serrant le disque de friction contre le plateau de réaction sous la sollicitation de la partie périphérique formant rondelle Belleville du diaphragme. Pour désengager l'embrayage il faut agir, dans ce mode de réalisation, en poussant axialement sur les doigts du diaphragme à l'aide du dispositif 3 pour faire basculer le diaphragme.

Le dispositif 3 est, dans les modes de réalisation représentés, dépourvu de fourchette de débrayage pour réduction de l'encombrement axial de l'ensemble. Le dispositif 3 est du type concentrique, en étant traversé par l'arbre intermédiaire 6.II comporte une butée de débrayage 35.

Dans un mode de réalisation, la butée de débrayage 35 peut appartenir à un dispositif de débrayage concentrique à commande par câble, cette butée étant alors montée sur une pièce menée mobile en translation et fixe en rotation, ladite pièce étant en relation de vis écrou avec une pièce menante fixe en translation et mobile en rotation. La pièce menante porte une poulie sur laquelle s'enroule le câble de commande. Pour plus de précisions, on se reportera au document US-A-5 141 091.

En variante la butée de débrayage 35 appartient à un dispositif de débrayage concentrique à commande électrique.

En variante la butée de débrayage 35 appartient à un dispositif de débrayage concentrique à commande hydraulique. Le dispositif de débrayage concentrique du type hydraulique comporte deux parties en relation de cylindre piston, à savoir une partie fixe, délimitant une cavité annulaire borgne d'orientation axiale, et un piston monté mobile axialement par rapport à la partie fixe.

Ce piston porte la butée de débrayage 35 et pénètre dans la cavité pour définir avec celle-ci une chambre de travail de volume variable, la cavité communiquant par un canal avec une conduite reliée à un maître cylindre actionnée par une pédale de débrayage ou un actionneur à moteur électrique commandé selon des programmes prédéterminés par un calculateur. La chambre de travail est donc admise à être pressurisée ou dépressurisée, le fluide de commande remplissant ladite chambre étant usuellement de l'huile.

Le canal pourra être creusé dans un voile 27 appartenant à un support 10 décrit ci-après. En variante le canal pourra appartenir à un tuyau 45 porté par le voile 27, qui pourra présenter à cet effet une creusure. Le tuyau 45 pourra également être porté par l'anneau de maintien 37 décrit ci-après.

La partie fixe du dispositif hydraulique de débrayage 3 pourra être en une seule pièce en matière moulable.

La partie fixe du dispositif hydraulique de débrayage 3 pourra comporter, pour réduction de l'encombrement radial, deux pièces coaxiales, à savoir, un corps extérieur 40 (Figure 1) entourant un tube guide métallique plus long axialement que le corps extérieur. Le fond de la cavité sera délimité par un rebord transversal appartenant au tube-guide assemblé au corps extérieur 40 à l'aide d'une pièce intermédiaire d'assemblage. Un joint d'étanchéité statique à soufflet (Figures 1 à 3) est prévu entre le corps extérieur et le tube-guide portant à son extrémité libre une butée pour limiter le déplacement du piston lorsque le dispositif de débrayage 3 n'est pas monté sur le voile 27.

En variante, le tube guide présente en section une forme de U assemblé par encliquetage au corps 40, présentant pour ce faire à son extrémité libre une pluralité de pattes élastiquement déformables en forme de crochets pénétrant dans des creusures du tube guide (Figure 1). Ces creusures sont réalisées dans la branche externe du tube guide à section en forme de U, ladite branche externe étant plus courte que la branche interne du U comme visible à la figure 1.

Le corps 40 pourra être assemblé par rivetage avec un fond 29 d'un manchon 28, décrit ci-après, que présente le voile 27.

En variante, le corps 40 pourra être assemblé par montage baïonnette avec un fond 29 d'un manchon 28, décrit ci-après, que présente le voile 27.

En variante, le corps 40 pourra être assemblé par montage baïonnette sur le fond du voile 27 à l'aide de rivets épaulés.

En variante, le corps du dispositif de débrayage est maintenu en appui sur le fond à l'aide d'un anneau de maintien 37 décrit ci après.

Un ressort de précharge agit entre le corps extérieur en matière moulable et la butée de débrayage 35 pour maintenir celle-ci en appui constant sur les moyens débrayeurs, ici l'extrémité interne des doigts du diaphragme de l'embrayage 9.

La butée de débrayage 35 est ici du type autocentreuse et comporte un roulement à billes avec une bague tournante profilée pour contact ponctuel avec les extrémités internes des doigts du diaphragme et une bague non tournante attelée axialement au piston 32, qui porte à autocentrage la butée 35. Pour plus de précisions sur l'autocentrage de la butée on se reportera par exemple au document FR 2 619 880, la bague extérieure ou intérieure du roulement étant tournante et profilée sur l'extrémité interne des doigts du diaphragme.

En variante le dispositif de débrayage est du type tiré, la butée agissant en tirant sur les doigts du diaphragme, qui prend appui sur l'appui primaire du diaphragme porté par le couvercle. Dans ce cas il n'est pas prévu d'appui secondaire.

Le double volant amortisseur 7 comporte des organes primaire et secondaire de volant moteur, sensiblement coaxiaux, mobiles en rotation l'un par rapport à la faveur de moyens de palier, tel qu'un roulement à billes visible à la figure 1 ou un palier lisse comme visible à la figure 1 du document DE 10 2011 107 144. L'organe primaire est, de manière connue, destiné à être fixé sur le vilebrequin du moteur thermique 52 à l'aide de vis visibles par exemple dans les documents DE 101 03 795, DE 10 2011 107 144 et WO 2010/079273. Ainsi on voit à la figure 14 un anneau troué centralement et muni de trous pour le passage des vis de fixation, le double volant amortisseur 7 étant du type de celui décrit dans le document WO 2010/079273, auquel on se reportera pour plus de précisions. Cet anneau appartient à l'organe primaire qui comprend un volant primaire flexible comprenant ici un disque de tôle flexible portant à sa périphérie externe un disque d'inertie portant une couronne dentée de démarrage pour engrenage, de manière décrite ci-après, avec un démarreur.

L'organe secondaire comporte le plateau de réaction 92 en fonte de l'embrayage à friction 9. Ce plateau de réaction présente à sa périphérie interne un moyeu pour son montage ici sur la bague externe du roulement à billes intercalé entre l'organe primaire et secondaire.

Dans un mode de réalisation des moyens élastiques, tels que des ressorts à boudins, interviennent entre les deux organes en association avec un limiteur de couple.

Dans un autre mode de réalisation décrit dans les documents DE 101 03 795, DE 10 2011 107 144 et WO 2010/079273 au moins un jeu de ressorts courbes à boudins de plus grande longueur circonférentielle interviennent entre les deux organes, primaire et secondaire.

Dans un autre mode de réalisation, décrit également dans ces documents DE 101 03 795, DE 10 2011 107 144 et WO 2010/079273, il est prévu deux étages de ressorts à boudins.

Dans le mode de réalisation de la figure 1, les deux organes, primaire et secondaire, du double volant amortisseur sensiblement coaxiaux et mobiles en rotation l'un par rapport à l'autre sont couplés grâce à des premiers et seconds moyens d'amortissement agencés en série par l'intermédiaire d'un voile de liaison.

Les premiers moyens d'amortissement comportent au moins un organe élastique courbe s'étendant circonférentiellement entre deux premiers sièges d'appui portés par le voile de liaison.

Les seconds moyens d'amortissement comportent au moins deux groupes d'organes élastiques, comportant chacun au moins deux organes élastiques droits agencés en série par l'intermédiaire d'un élément intermédiaire d'appui, chaque groupe d'organes élastiques droits s'étendant circonférentiellement entre deux seconds sièges d'appui portés par le voile de liaison, au moins un organe annulaire de phasage des organes élastiques droits, distinct du voile de liaison , portant l'élément intermédiaire d'appui de chaque groupe. Il est prévu également un limiteur de couple et des moyens d'étanchéité pour les ressorts. Pour plus de précision on se reportera au document WO 2010/079273.

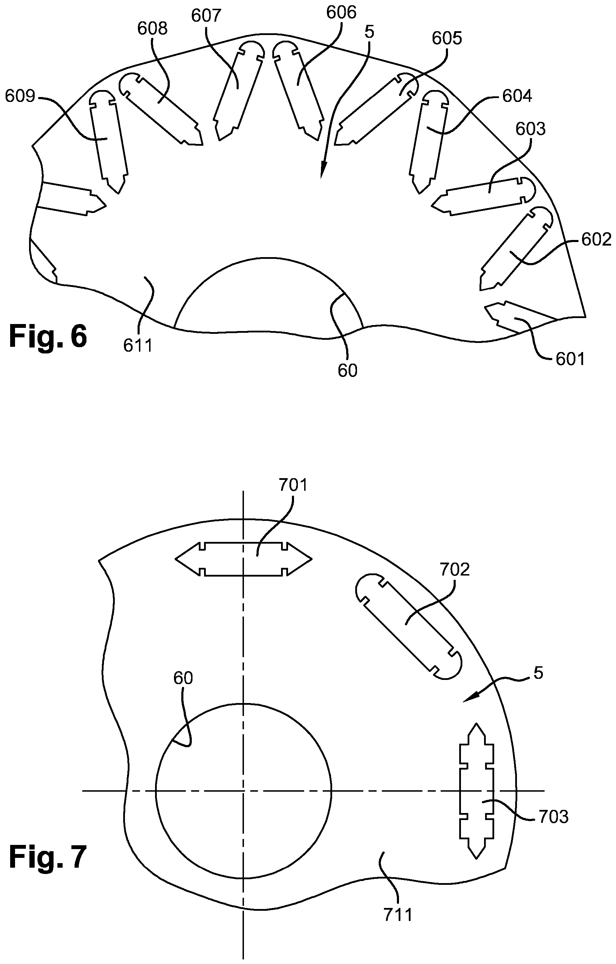

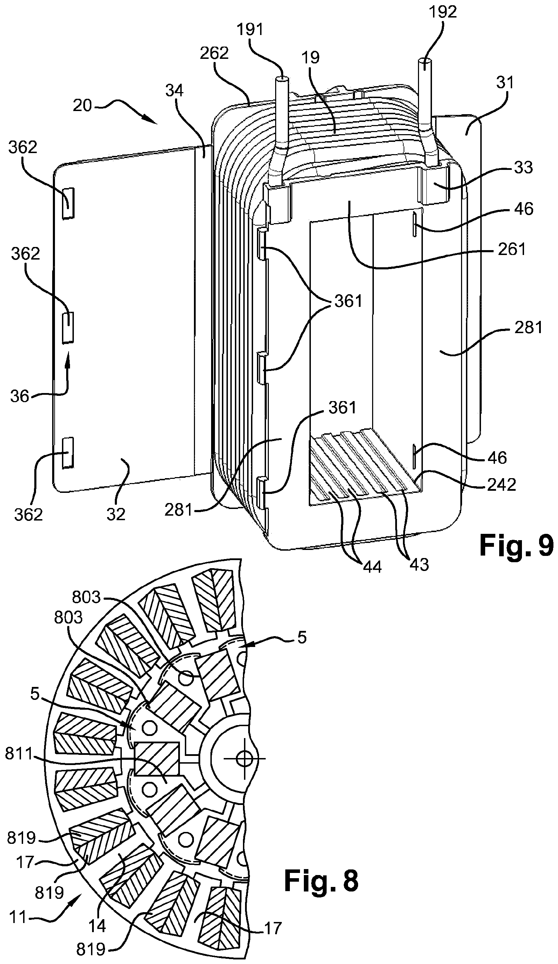

Dans ce mode de réalisation la machine 4 est une machine synchrone dont le rotor 5 est doté d'aimants permanents. Plus précisément de manière connue, pour diminution des courants de Foucault, le rotor 5 comporte un corps sous la forme d'un paquet de tôles dont l'une est référencée en 611, 711 et en 811 respectivement dans les figures 6, 7 et 8. Dans la figure 6 les aimants permanents 602 à 610 sont implanté en V dans les tôles du paquet de tôles. Dans la figure 7 les aimants permanents 702 à 705 sont implantés de manière surfacique à la périphérie externe des tôles 711 du paquet de tôles. Dans la figure 8 les aimants permanents 803 sont implantés radialement dans les tôles 811 du paquet de tôles, le rotor étant à concentration de flux. Les aimants permanents sont implantés dans des ouvertures associées du paquet de tôles. Ces ouvertures sont prolongées par des orifices- non référencés dans les figures 6 et 7- pour diminuer les fuites du flux magnétique.

Les aimants permanents sont dans un mode de réalisation des aimants permanents en terre rare par exemple en Néodyme- fer- bore ou à base de Samarium Ces aimants pourront contenir une proportion plus ou moins importante de Dysprosium. Dans un autre mode de réalisation les aimants permanents sont des aimants en ferrite moins coûteux. Plusieurs aimants permanents peuvent être montés dans une même ouverture du paquet de tôles.

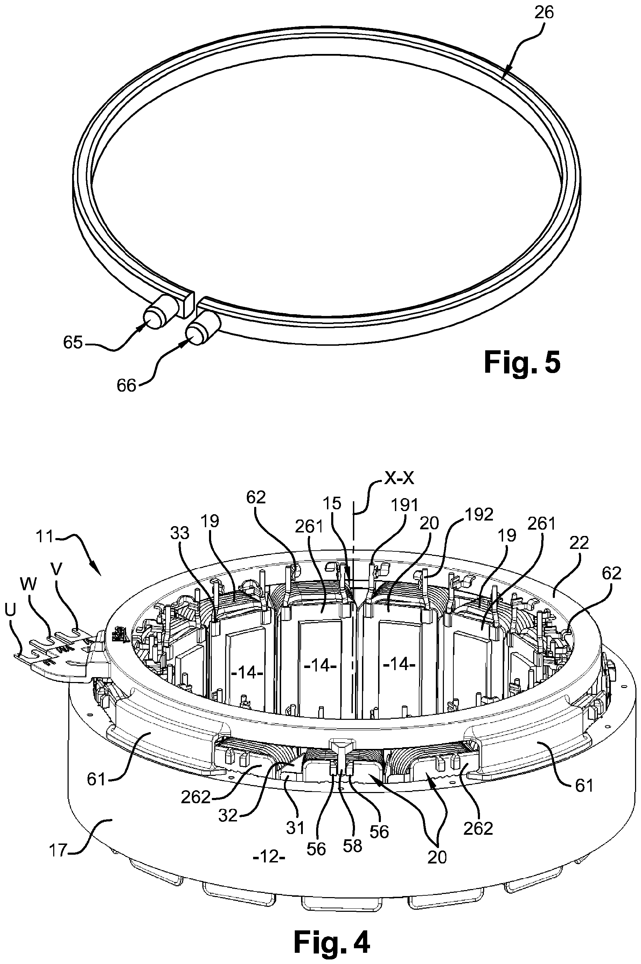

Comme mieux visible dans les figures 4 et 9 le stator 11 dans ce mode de réalisation appartient à une machine électrique tournante polyphasée comportant un bobinage de stator doté de plusieurs bobines 19 concentriques, ici préformées, et d'un point neutre, dit neutre de la machine, visible par exemple à la figure 1 du document EP 0 831 580. Ce stator est compact et performant du point de vue de la puissance de la machine électrique.

Ce stator est décrit dans la demande FR 12/55770 déposée le 20/06/2012 à laquelle on se reportera pour plus de précisions. Les bobines 19 sont interconnectées entre elles à l'aide d'un interconnecteur 22 compact comportant plusieurs cadres dont l'un, dit cadre de neutre est relié au neutre de la machine électrique tournante. Ce stator 11 comporte un corps de forme annulaire d'axe confondu avec l'axe X-X. Ce corps présente des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps est formé par un empilement de tôles réalisées en matière ferromagnétique s'étendant dans un plan radial perpendiculaire à l'axe X-X. Le paquet de tôles est maintenu au moyen de rivets (non représentés) traversant axialement de part en part l'empilement des tôles. Cet empilement permet de réduire les courants de Foucault.

Comme cela est visible sur la figure 9, on monte sur les dents 14 du stator les bobines 19 préformées formant le bobinage du stator 11. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 métallique délimitant l'encoche par l'intermédiaire d'un isolant de bobine 20 Cet isolant 20 est un isolant électrique réalisé dans ce mode de réalisation en matière électriquement isolante et moulable. Les extrémités 191, 192 de chaque bobine 19 dépassent axialement du bobinage d'un même côté du stator 11 correspondant au côté supérieur du stator 11. De préférence, les extrémités 191, 192 des bobines 19 sont situées sensiblement suivant une même circonférence du côté de l'extrémité libre des dents 14, c'est-à-dire du côté éloigné de la culasse 17 et du côté le plus proche de l'entrefer entre la périphérie interne du stator et la périphérie externe du rotor que comporte la machin électrique. Chaque bobine 19 comporte une première extrémité 191 appelée "entrée" destinée à être connectée avec les autres entrées de manière alternée pour appartenir à une des phases, présentant chacune un terminal respectivement U, V, W, de la machine et une deuxième extrémité 192 appelée "sortie" destinée à être reliée au neutre de la machine électrique. A cet effet, les bobines 19 sont interconnectées entre elles pour former les différentes phases à l'aide de l'interconnecteur 22 compact d'axe X confondu avec l'axe X -X lorsque l'interconnecteur 22 est installé sur le stator 11.

Cet interconnecteur 22 comporte dans ce mode de réalisation quatre cadres de forme annulaire s'étendant suivant un plan radial. Les cadres sont électriquement conducteurs en étant par exemple en cuivre ou avantageusement en un autre matériau métallique soudable. Ces cadres ont des diamètres internes et externes sensiblement identiques. Le diamètre externe des cadres, correspondant sensiblement au diamètre externe de l'interconnecteur 22, est inférieur au diamètre externe du stator 11, constitué par le diamètre externe de la culasse 17, pour faciliter une opération d'imprégnation des bobines 19 et réduction de l'encombrement diamétral. Ces cadres sont empilés axialement les uns sur les autres et isolés électriquement entre eux. Chaque cadre porte sur sa périphérie interne des pattes (Non référencées à la figure 4) apparentes s'étendant en saillie radiale vers l'intérieur du cadre pour le soudage des extrémités 191, 192 des bobines du stator. De préférence, les cadres sont noyés dans un corps réalisé en matériau électriquement isolant, tel que de la matière plastique. Une couche de matière électriquement isolante est présente entre chaque cadre.

Un des cadres, dit cadre neutre, est destiné à être relié au neutre du bobinage de la machine électrique comprenant les bobines 19 agencés ici selon un montage en étoile avec un point neutre constitué à la faveur du cadre neutre. Ce cadre de neutre est situé à une extrémité de l'empilement des cadres, ici à l'extrémité la plus éloignée de la culasse 17. Etant donné que chaque bobine 19 a une extrémité de sortie 192 reliée au neutre, le cadre de neutre comporte un nombre de pattes égal au nombre de bobines 19, en l'occurrence égal à 15.

Les trois autre cadres, dits cadres de phase, sont destinés à être reliés chacun aux entrées 191 des bobines 19 de la phase concernée de la machine électrique, ici de type triphasée.

Bien entendu, dans un autre mode de réalisation on peut augmenter le nombre de cadres de phase en fonction du nombre de phases de la machine 4. Ainsi, dans un mode de réalisation, les nombre de cadres de phase est égal à cinq ou à six, la machine 4 étant alors du type pentaphasé ou hexaphasé.

Les extrémités d'entrée 191 des bobines 19 sont ainsi alternativement reliées circonférentiellement aux sorties de phase du bobinage de la machine électrique par l'intermédiaire d'un des cadres de phase de l'interconnecteur 22. Les cadres de phase comportent chacun un nombre de pattes égal au nombre de bobines divisé par le nombre de phases de la machine, soit ici 15/3=5 (cf. figure 4). Plus précisément chaque phase comporte cinq bobines 19 reliées électriquement entre elles par l'un des cadres de phase, dont le nombre de pattes 36 est égal à cinq.

A cet effet, chaque cadre de phase comporte sur sa périphérie externe un terminal de connexion pour l'interconnexion avec un connecteur de puissance (non représenté) lui-même relié à un onduleur décrit par exemple dans le document EP 0 831 580. En variante l'onduleur est commandé par des signaux comme dans le document FR 2 745 444.

Dans les réalisations la machine électrique tournante est un alternateur réversible appelé alterno-démarreur, qui peut fonctionner en mode alternateur ou en mode démarreur. Cette machine permet donc de démarrer le moteur thermique et de fonctionner en mode alternateur notamment pour recharger la batterie du véhicule et/ou alimenter les consommateurs d'énergie lorsque le moteur thermique tourne, l'embrayage 9 étant alors engagé. Cette machine électrique est configurée pour arrêter le moteur thermique, par exemple au feu rouge ou dans les bouchons, et de le redémarrer ensuite (Fonction Stop and Go en Anglais). Elle permet d'éviter que le moteur thermique cale en fournissant un surplus de puissance (fonction boost en Anglais) l'embrayage 9 étant alors engagé. Elle permet d'entraîner le véhicule au moins sur une courte distance, l'embrayage 9 étant alors désengagé et le moteur thermique arrêté. Elle est configurée pour récupérer de l'énergie lors du freinage du véhicule.

A la lumière des figures on voit que le double volant présente à l'avant et à sa périphérie externe une couronne dentée (non référencée) pour engrènement avec le pignon d'un démarreur. Ce démarreur pourra être complémentaire pour démarrer le véhicule automobile par grand froid comme décrit dans le document FR 2 797 472 auquel on se reportera.

A la lumière des documents précités on voit que dans ce mode de réalisation les terminaux de connexion des phases U, V, W phases de la machine 4 sont configurés pour être reliées à une unité de commande et de contrôle par une liaison à câble. Il pourra donc être prévu des capteurs, tels que des capteurs à effet Hall, associés à une cible magnétique, tel qu'un anneau magnétique, pour détecter la position angulaire du rotor 5. L'anneau magnétique pourra être porté par la face avant du rotor 5, tandis que les capteurs à effet Hall pourront être regroupés par exemple par trois en étant intégrés dans un porte- capteurs, qui pourra être porté par voile 27, décrit ci-après, en vis-à-vis de la cible. L'unité de commande et de contrôle pourra être déportée ou en variante portée par un support 10 décrit ci-après. Dans tous les cas, embrayage 9 engagé ou désengagé on obtient une bonne filtration des vibrations grâce au volant 7 et à l'amortisseur 8.

Dans le mode de réalisation des figures 4 et 9 les terminaux de connexion U, W, V placés côte à côte présentent une extrémité en forme de U et constituent les sorties des phases du bobinage à bobines 19 de la machine. On appréciera que les terminaux sont simplifiés du fait qu'ils font partie des cadres. Ces terminaux U, V, W sont rigides et d'un encombrement réduit. Ils peuvent être orientés à volonté.

Les pattes des différents cadres sont décalées angulairement les unes par rapport aux autres. En outre, pour avoir suffisamment de place pour pincer une patte et une extrémité 191, 192 d'une bobine 19 à l'aide d'une électrode de soudage, un ensemble formé par une patte d'un des cadres de phase et une patte du cadre de neutre destinées à être soudées sur les extrémités 191, 192 d'une même bobine 19, est configuré de manière à être positionné entre les côtés de ladite bobine 19 s'étendant entre les extrémités axiales de la bobine 19.

Par ailleurs, l'interconnecteur 22 comporte dans ce mode de réalisation deux pions 58 dont un seul est visible à la figure 4. Ces pions 58 permettent, lors du montage, l'indexage de l'interconnecteur 22 par rapport aux bobines 19 afin de réduire les risques de mauvaises connexions entre les bobines. Ces pions d'indexage 58 d'extension axiale sont portés par une périphérie externe de l'interconnecteur 22. Suivant une réalisation, ces pions comportent une base venant de matière avec la périphérie externe de l'interconnecteur 22 portant une tige de forme sensiblement cylindre ayant une extrémité libre biseautée. Ces pions d'indexage sont destinés à coopérer avec des systèmes de guidage portés par les isolants de bobine 20. Ces systèmes de guidage sont formés par des protubérances 56 définissant un passage pour un pion d'indexage 58.

L'interconnecteur 22 comporte également des pieds d'appui 61 destinés à reposer sur un rebord de la culasse 17 du stator 11. Ces pieds d'appui 61 présentent une forme en L avec une extrémité fixée à la périphérie externe du corps dans lequel sont noyés les cadres et une extrémité terminée par un support 62 en appui sur le rebord de la culasse 17.

Les pieds d'appui 61 sont ici au nombre de quatre répartis de manière régulière autour du corps de l'interconnecteur 22. Les pieds d'appui 61 permettent de maintenir le corps du connecteur 22 au-dessus des bobines 19 sans que le corps soit en contact avec les bobines 19. En outre, l'encombrement circonférentiel des pieds 19 est suffisamment faible pour éviter que l'interconnecteur 22 recouvre entièrement la périphérie externe des bobines 19, ce qui facilite le refroidissement du stator 11 du fait de la grande zone de dégagement entre deux pieds d'appui 61 successifs et de l'espace entre le corps de l'interconnecteur 22 et les bobines 19.

L'isolant de bobine 20 est un isolant électrique réalisé ici en matière électriquement isolante et moulable. L'isolant 20 a un corps comportant un cadre de forme globalement rectangulaire destiné à être positionné autour d'une dent 14 afin d'isoler électriquement la bobine 19 par rapport à la dent 14 métallique. Ce cadre (cf. Figure 9) est formé par une paroi supérieure et une paroi inférieure 242 sensiblement perpendiculaire à l'axe X -X et deux parois latérales reliant les parois supérieure et inférieure entre elles. Les parois latérales sont parallèles à l'axe X du stator 11.

Le corps de l'isolant 20 comporte (Figure 9) en outre un rebord avant 261 et un rebord arrière 262 définissant avec les parois du cadre une gorge de montage de la bobine 19. Le rebord arrière 262 est destiné à être positionné à proximité de la culasse 17 tandis que le rebord avant 261 est situé du côté de l'extrémité libre d'une dent 14, c'est-à-dire du côté de la périphérie externe du rotor (non représenté). Le corps est réalisé ici en matière électriquement isolante rigide par exemple en matière plastique telle que du PA 6.6, qui pourra être renforcé par des fibres, telles que des fibres de verre.

Chaque rebord 261, 262 comporte deux bordures longitudinales référencées 281 pour le rebord avant 261. Ces bordures longitudinales forment avec les parois latérales la partie de la gorge recevant les côtés d'un bobinage.

Chaque rebord 261, 262 comporte également deux bordures reliant entre elles les bordures longitudinales de chaque rebord 261, 262. Ces bordures transversales forment avec les parois supérieure et inférieure la partie de la gorge recevant les extrémités des bobinages dépassant axialement de part et d'autre d'une dent 14 appelées chignons.

Une des bordures longitudinales du rebord arrière 262 est prolongée par un talon 31; tandis que l'autre bordure longitudinale du rebord arrière 262 est prolongée par une ailette 32 via une zone 34 de raccordement entre l'ailette 32 et le rebord arrière 262. Cette zone 34 de raccordement présente une épaisseur inférieure à l'épaisseur du rebord arrière 262 de manière à constituer une zone de pliage. L'ailette 32 est ainsi pliable en direction du corps 23 de l'isolant de bobine suivant la zone 34 de pliage qui s'étend longitudinalement perpendiculairement aux parois supérieure 241 et inférieure 242. Une fois pliée, l'ailette 32 constitue un mur électriquement isolant entre deux bobines 19 successives. Les talons 31 permettent de réduire les pertes de tension entre la culasse 17 et les bobines 19.

Dans un mode de réalisation, l'ailette 32 est destinée à être pliée et laissée libre. Dans ce cas, lorsque les isolants 20 de bobine sont montés sur les dents 14, l'ailette 32 d'un isolant 20 donné prend appui contre un rebord avant 261 d'un isolant de bobine 20 adjacent.

Dans un autre mode de réalisation, l'ailette 32 est fixée au moyen d'un système d'encliquetage avec la bordure longitudinale 281 du rebord avant 261 située du côté de l'ailette 32. Comme montré sur les figures 9, le système d'encliquetage pourra être formé par des pattes 361 portées par la bordure longitudinale 281 du rebord avant 261. Ces pattes 361 sont destinées à coopérer par encliquetage avec des fenêtres 362 ménagées dans la paroi de l'ailette 32.

Par ailleurs (Figure 9) afin de permettre le passage d'un vernis d'imprégnation entre l'isolant 20 et la dent 14 pour la fixation de ces deux éléments 14 et 20 entre eux, des rainures borgnes 43 sont ménagées dans les faces des parois supérieures du cadre en regard l'une de l'autre tournées vers l'intérieur de l'isolant 20, c'est-à-dire tournées respectivement vers les faces externes supérieure et inférieure de la dent 14. Ces rainures 43 s'étendent sensiblement perpendiculairement aux rebords avant 261 et arrière 262. Ces rainures 43 sont fermées, c'est-à-dire non débouchantes, du côté du rebord avant 261 afin d'éviter que le vernis d'imprégnation coule dans la partie intérieure de la machine au niveau de l'entrefer entre le rotor et le stator de celle-ci lorsque le verni est injecté depuis l'extrémité ouverte des rainures 43 située du côté de la culasse 17. Les faces internes des parois supérieure et inférieure présentent ainsi une alternance de rainures 43 et de nervures 44 situées entre deux rainures 43 successives.

Pour garantir un maintien efficace de la bobine 19 sur la dent 14 lors de l'injection du vernis d'imprégnation à l'intérieur des rainures 43, un système d'accrochage assure une fixation de l'isolant 20 de bobine sur la dent 14. Ce système d'accrochage est formé par des ergots 46 d'accrochage et des rainures de faible profondeur appelées "piquage" ménagées dans la dent 14 pour l'encliquetage des ergots 46.

L'interconnecteur 22 est fixé sur le stator 11 par soudage des pattes du cadre de neutre et des cadres de phase avec les extrémités 191, 192 des bobines. Il est tiré partie de l'interconnecteur 22 de manière décrite ci-après.

Bien entendu en variante on pourra prévoir des isolants d'encoche entre deux dents 14 consécutives pour monter les bobines 19, les dents 14 présentant alors un pied comme visible à la figure 8. Bien entendu le bobinage du stator pourra être réalisé de manière conventionnelle à l'aide d'enroulement ondulé ou en boucle. En variante le bobinage du stator pourra faire appel à des conducteurs en forme de barres, telles que des épingles, comme décrit dans le document EP 1 107 433.

En variante les dents 14 du corps du stator 11 pourront être rapportées dans la culasse 17, par exemple par un montage à queue d'aronde, pour réaliser par avance le montage des bobines 19 sur les dents 1. En variante le corps du stator pourra être segmenté tel que décrit par exemple dans le document US 2010/023 77 26.

Le corps du rotor 5 est monté sur un moyeu de support 48 décrit ci-après. La périphérie interne 60 (figures 6 et 7) du corps du rotor 5 est montée sur la périphérie externe du moyeu 48. Ce montage pourra être réalisé par emmanchement à force. En variante il pourra être réalisé par frettage. En variante la périphérie externe du moyeu est moletée et le paquet de tôles du rotor est emmanché à force sur le moletage du moyeu 48. Ce moyeu 48 pourra être en acier. Dans tous les cas le corps du rotor est solidaire axialement et en rotation du moyeu 48.

Le stator 11 de la machine entoure le rotor 5 avec présence d'un entrefer entre la périphérie interne du stator 11 et la périphérie externe du rotor 5.

Suivant une caractéristique l'ensemble 1 comporte un module hybride 2 comprenant le dispositif de débrayage 3, la machine électrique 4, et l'amortisseur de torsion 8. Ce module 2 est manipulable et se fixe sur le carter du moteur thermique 52. Il pourra être transportable et comporte à cet effet des moyens de maintien du dispositif de débrayage 3. Ces moyens pourront consister en un anneau de maintien 37 décrit ci-après.

Comme visible par exemple à la figure 1, ce module 2 comporte un support 10 monobloc destiné à assurer la fixation de l'ensemble de transmission, d'une part sur le carter du moteur thermique 52 et d'autre part sur le carter de la boîte de vitesses 53. Le support 10 coiffe l'embrayage à friction 9 et forme ainsi une cloche de logement de l'embrayage à friction 9. Le support 10 10 couvre également une partie du double volant amortisseur 7.

Le support 10 pourra être métallique. Il pourra être en matière moulable en étant par exemple en Aluminium ou en un alliage à base d'aluminium. Il est de préférence en matière amagnétique. Ce support 10 présente de manière précitée un voile 27 interne formant une paroi de séparation entre le rotor 5 et l'embrayage 9 comme visible à la figure 1. Ce voile 27 est ainsi décalé axialement par rapport à la face avant support 10.

La périphérie externe du corps du stator 11 en forme de paquet de tôle est montée à serrage dans le support 10 présentant dans ce mode de réalisation une périphérie interne de forme cylindrique pour coopérer avec la périphérie externe du corps du stator 11. Le montage du corps du stator 11 dans le support 10 est réalisé par un ajustement serré, tel qu'un frettage.

Dans un mode de réalisation l'extrémité avant de l'arbre intermédiaire 6 se monte dans le vilebrequin du moteur thermique 53, de manière connue, via un roulement pilote monté dans une cavité du vilebrequin.

Dans un mode de réalisation avantageux l'arbre intermédiaire 6 s'étend en porte à faux à l'avant du module 2, ce qui simplifie le montage du module hybride 2 de l'ensemble 1 sur le moteur thermique équipé du double volant amortisseur 7 et de l'embrayage 9.

Dans un mode de réalisation le support 10 du module hybride 2 comprend des premiers moyens de fixation 13 qui sont configurés pour être fixés sur le carter de la boîte de vitesse 53 et des seconds moyens de fixation qui sont configurés pour être fixés sur le carter du moteur thermique 52. Les premiers 13 et seconds 16 moyens de fixation peuvent consister comme cela est illustré sur les figures 13 et 14 en des rebords externes saillants troués. En variante, les premiers 13 et/ou deuxièmes 16 moyens de fixation peuvent consister en des trous réalisés dans un fond du support 10. Cette variante est illustrée dans la figure 12 selon laquelle les moyens de fixation 13 consistent en des trous réalisés dans un fond du support 10. Ces trous issus de fond ou de rebord externe permettent le passage d'organes de fixation tels que des rivets.

Le support porte intérieurement entre les premiers et seconds moyens de fixation le stator 11 de la machine électrique. Pour cela, la culasse du stator 11 est par exemple, fixée par frettage à l'intérieur du support 10.

Selon un mode de réalisation, le stator comporte un interconnecteur 22 représenté notamment sur les figures 1 à 3 avec des terminaux de connexion U, V et W représentés sur la figure 4 pour l'interconnexion avec un connecteur de puissance. Le support 10 peut comporter un passage 23 illustré sur les figures 13 et 14. Ce passage permet la sortie des terminaux de connexion à l'extérieur du support 10.

Selon un mode de réalisation, le support 10 présente un circuit de refroidissement pour refroidir le stator. Un tel circuit de refroidissement permet de faire circuler de manière étanche un liquide de refroidissement Le circuit de refroidissement comporte un conduit 55. Le conduit 55 présente une forme générale annulaire et présente une section entourée par la matière du support 10. Le conduit annulaire 55 est associé avec un premier connecteur comportant un orifice d'entrée 24 et un second connecteur comportant un orifice de sortie 25, représentés sur les figures 13 et 14. Les connecteurs sont agencés pour permettre un raccordement à un réservoir de stockage du liquide refroidissement via une canalisation d'amenée et une canalisation de retour. Une pompe, non illustrée, permet de faire circuler le liquide de refroidissement dans le circuit de refroidissement.

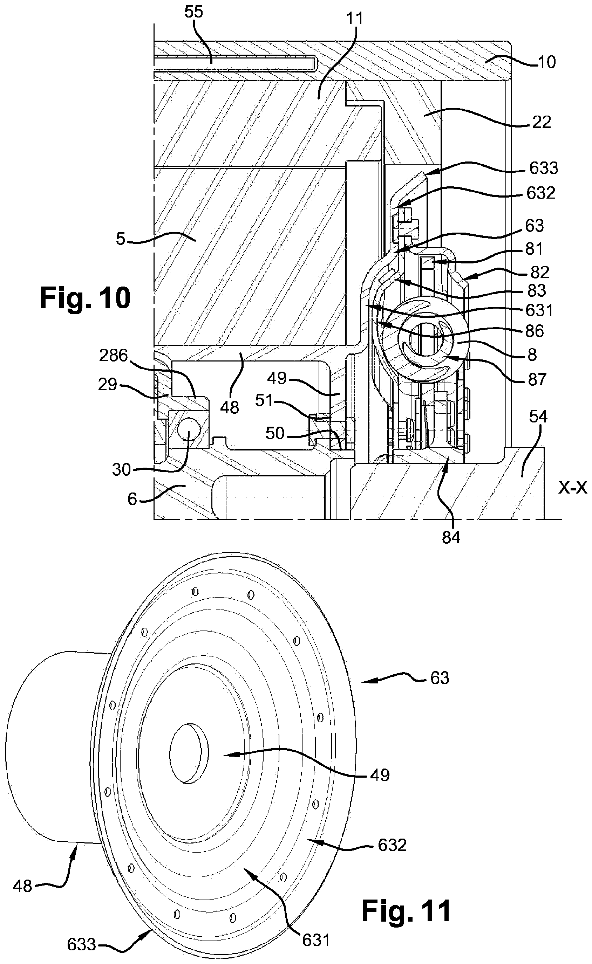

Dans un mode de réalisation, illustrée en coupe sur les figures 1 à 3 et 10, le conduit de forme annulaire 55 est formée lors du moulage du stator et noyé dans la matière de l'élément de support. Pour cela, le conduit de forme annulaire est réalisé par moulage à modèle perdue, tel qu'un moulage en sable. Le conduit de forme annulaire 55 s'étend sur la quasi-totalité du pourtour du support autour du stator 11. Dans un second mode de réalisation, le conduit annulaire est formé par un tube 26, illustré sur la figure 5. Dans ce cas, le support 10 est fabriqué par surmoulage sur ledit tube 26. Le tube 26 comporte à ses deux extrémités des connecteurs présentant respectivement un orifice d'entrée 65 et un orifice de sortie 66. Le tube 26 permet également la circulation 'un liquide de refroidissement.

Avantageusement, les deux moyens de fixations 13 et 16 sont présents de part et d'autre du support 10 qui présente une certaine longueur entre la boite de vitesse 53 et le carter du moteur 52. On évite ainsi un cheminement du circuit de refroidissement entre les différents trous de fixation tel que cela est décrit dans les figures 13 et 14 de la demande de brevet PCT/FR99/01863.

Selon un mode de réalisation, le support 10 comporte un voile interne 27 illustré sur les figures 1 à 3 et 10. Ce voile interne permet la séparation entre la machine électrique 4 et l'embrayage à friction 9. Ainsi, le voile interne 27 permet d'éviter l'arrivée des poussières de l'embrayage dans la machine électrique 4, qui peuvent perturber le fonctionnement de la machine électrique.

Ce voile interne présente à son extrémité interne un manchon 28 de forme axial qui pénètre à l'intérieure du rotor 5 comme cela est illustré dans les figures 1, 3 et 10. Ce manchon 28 est traversé par l'arbre intermédiaire 6. Le manchon 28 présente deux portions 285 et 286 illustrées notamment sur les figures 1-3 qui n'ont pas le même diamètre. La portion 286 qui s'étend plus à l'intérieur du rotor 5 a un diamètre inférieur à celui de la portion 285. Ainsi, on peut monter un roulement à bille 30 sur entre la deuxième portion 286 et l'arbre intermédiaire 6. Les deux portions 285 et 286 s'étendent axialement de part et d'autre d'un fond 29 du manchon. Ce fond est troué de manière à pouvoir être traversé par l'arbre 6.

Suivant une caractéristique le dispositif de débrayage 3 concentrique de l'embrayage à friction 9, traversé par l'arbre 6, est monté en partie à l'intérieur de la première portion 285 du manchon 28. Ce dispositif 3 est radialement compact.

Le dispositif de débrayage 3 des figures 1 à 3 est, de manière précitée, une butée à commande hydraulique 35 en appui sur le fond 29. Ce dispositif comporte un soufflet de protection.

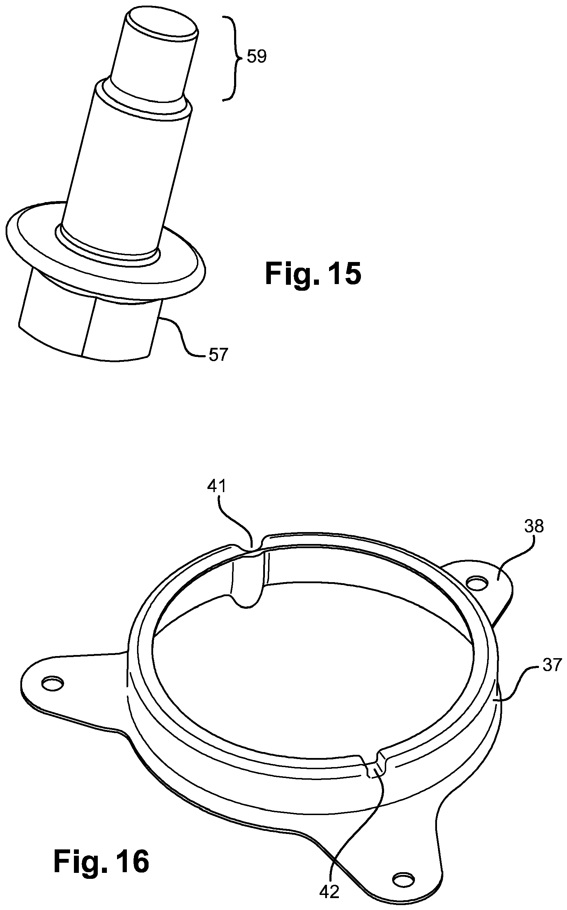

Il est prévu un anneau de maintien 37 (cf. figures 1 à 3 et 16) du dispositif de débrayage 3 pénétrant dans le manchon 28 et doté d'au moins une patte 38 de fixation sur voile 27. Comme visible à la figure16 cet anneau comporte trois pattes 38 pour sa fixation à l'extrémité interne globalement transversale du voile 27 d'un seul tenant avec le support 10. Ce voile 27 est ici venu de moulage avec le support 10.

Le dispositif de débrayage 3 présente, de manière précitée, un corps 40 (cf. figures 1 à 3). L'extrémité de l'anneau 37 qui pénètre dans le manchon 28 présente une collerette d'appui 39 sur le corps du dispositif de débrayage 3. Cet anneau 37 est ici en tôle emboutie.

La collerette d'appui de l'anneau 37 est avantageusement inclinée axialement, ainsi elle exerce une précharge sur le corps 40 du dispositif de débrayage 35.

Selon un mode de réalisation, l'anneau de maintien 37 comporte une échancrure ou un appendice 42 pour coopérer respectivement avec un appendice ou une échancrure appartenant au corps 40 du dispositif de débrayage 3 pour blocage en rotation dudit corps 40.

L'anneau de maintien 37 (cf. figures 1 à 3 et 16) peut présenter un passage 41 pour un tuyau d'alimentation 45 de la butée à commande hydraulique. 21. Le tuyau 45 peut être guidé par le voile 27. Pour cela, ce voile 27 du support 10 comporte une creusure de maintien dudit tuyau d'alimentation 45.

Selon un mode de réalisation, le module hybride 2 comprend un moyeu de support du rotor 48 (cf. figures 1 à 3) fixé à l'extrémité arrière de l'arbre intermédiaire 6 à l'amortisseur de torsion 8. Avantageusement, le moyeu de support 48 du rotor 5 présente à l'avant une épaisseur réduite. Ainsi, la pénétration à jeu radial du manchon 28 à l'intérieur du moyeu 48 est possible. Pour sa fixation, le moyeu peut comporter un rebord interne 49 d'orientation globalement transversale. Ainsi, en fixant le rebord interne 49 à l'extrémité arrière de l'arbre intermédiaire 6, on fixe le moyeu 48. Pour sa fixation au rebord interne 49 et au moyeu 48, l'arbre intermédiaire 6 présente à son extrémité arrière une portée de centrage 50 et une butée axiale 51 pour le rebord interne 49. Cette portée 50 et cette butée 51 permettent le positionnement du rebord interne 49 et donc du rotor 5. La butée axiale 51 et le rebord interne 49 sont troués pour le passage d'organe de fixation, par exemple des rivets, du rebord interne 49 avec l'arbre intermédiaire 6.

L'amortisseur de torsion 8 visibles sur les figures 1 à 3, 10, 12, et 13 comporte à l'avant une première rondelle de guidage 83 visible sur les figures 1 à 3 et 10 et à l'arrière une deuxième rondelle de guidage 82 visible sur les figures 1 à 3 et 10. L'amortisseur de torsion comprend également un moyeu de sortie 84 solidaire en rotation de l'organe d'entrée 54 de la boîte de vitesse 53 (cf. figures 2, 3 et 10). Le moyeu de sortie 84 est relié à un voile de moyeu 81 de direction globalement radiale 84. Les deux rondelles 83 et 82 sont disposées de part et d'autre du voile de moyeu 81. Par ailleurs, la première rondelle de guidage 83 est solidaire en rotation de l'arbre 6 par la fixation de la périphérie interne de ladite première rondelle de guidage au rebord interne 49 du moyeu 48 du rotor 5.

Selon un mode de réalisation, la périphérie interne de la première rondelle de guidage 83 est décalée axialement vers l'avant pour créer un jeu axial entre la première rondelle de guidage 83 et l'extrémité arrière du rotor 5.

Par ailleurs, les organes de fixation précités passant au travers de la butée axiale 51 et du rebord interne 49 troués pour fixation du rebord interne 49, traversent également la première rondelle de guidage 83. Ainsi, ils permettent la fixation de la première rondelle de guidage et du moyeu 48 du rotor 5 sur la butée axiale 51 de l'arbre intermédiaire 6.

La première rondelle de guidage 83 peut comporter des crevés 86 visibles sur les figures 1 à 3. Ces crevés permettent le montage d'organes élastiques 87, tels que des ressorts à boudins, qui agissent circonférentiellement entre le voile du moyeu 81 et les première et deuxième rondelles de guidage respectivement 82 et 83.

Selon un premier mode de réalisation représenté sur la figure 1, la première rondelle de guidage 83 présente à sa périphérie externe un rebord courbé dirigé vers le rotor 5 de manière à créer un déflecteur 85 pour éviter la pénétration des particules issues notamment de l'amortisseur 8 dans la machine électrique 4. Par exemple comme cela est illustré sur la figure 1, le déflecteur 85 est positionné à l'intérieur de l'interconnecteur 22.

Selon un deuxième mode de réalisation représenté sur les figures 2, 3, 10 et 11, la première rondelle 83 n'est pas courbée mais le module hybride 2 comprend en plus des première et deuxième rondelles de guidage de l'amortisseur 8, un flasque anti poussière 63 visible sur les figures 2, 3, 10 et 11. Le flasque 63 permet d'éviter la pénétration des particules issues notamment de l'amortisseur 8 dans la machine électrique 4. Le flasque 63 est issu d'un prolongement à l'arrière du moyeu 48 du rotor 5. Il est solidaire de la première 83 et /ou la deuxième rondelle de guidage 82.

Selon une caractéristique de ce deuxième mode de réalisation, la périphérie interne 631 du flasque 63 est décalée axialement vers l'arrière par rapport au rebord interne 49.

Selon une autre caractéristique de ce deuxième mode de réalisation, la périphérie externe 632 du flasque 63 est décalée axialement vers l'arrière par rapport à la périphérie interne du flasque 63. Selon une autre caractéristique, la périphérie externe du flasque 63 présente une extrémité 633 inclinée en direction opposée au rotor 5 (cf. figures 2, 3, 10 et 11).

Selon une caractéristique de ce deuxième mode de réalisation l'extrémité inclinée 633 est positionnée à l'intérieur de l'interconnecteur 22 comme cela est visible sur les figures 2, 3 et 10.

Selon une autre caractéristique de ce deuxième mode de réalisation, dans le cas où la première rondelle de guidage 83 comporte des crevés 86 pour le montage d'organes élastiques 87, tels que des ressorts à boudins, le flasque 63 est conformé entre ses périphéries interne 631 et externe 632 pour suivre le profil des crevés 86.

Par ailleurs, comme illustré sur la figure 3 le support 10 peut porter à l'arrière de l'interconnecteur 22 un bouchon magnétique 52 pour recueillir les particules métalliques provenant de l'amortisseur de torsion.

Ainsi qu'il ressort à l'évidence de la description et des dessins, on fixe d'abord le double volant amortisseur 7 et l'embrayage 9 sur le vilebrequin du moteur 52 puis on fixe le module hybride 2 sur le carter moteur et enfin le carter de la boite de vitesse 53 sur le module hybride.

Le corps 40 du dispositif de débrayage 3 pourra être en matière moulable. Il pourra être en Aluminium ou en variante en matière plastique avantageusement renforcée par des fibres.

Le bouchon magnétique 52 présente une partie magnétique 59 à son extrémité interne en vis-à-vis de la périphérie externe de l'amortisseur 8. Il présente une partie 57 à tête par exemple à six pans pour se visser dans le support 10 métallique entre l'interconnecteur 22 et l'extrémité arrière du support 10. A la figure 3 on a schématisé le chemin 67 suivi par les particules métalliques provenant de l'amortisseur 8 et attirées par les parties métalliques 57 du bouchon magnétique.

Le flasque antipoussière 63 présente une périphérie interne 631 de raccordement au moyeu 48 décalée axialement vers l'arrière par rapport au rebord interne 49 et à la face arrière du rotor 5 pour éviter les fuites magnétiques. Ce flasque 63 présente également des ouvertures à sa périphérie externe 632 pour le passage de rivets d'assemblage du flasque avec la périphérie externe des rondelles de guidage métalliques 82, 83 et donc à l'amortisseur 8. De même, à la figure 2, la première rondelle de guidage 83 présente à sa périphérie interne des ouvertures pour son assemblage à l'aide de vis à la périphérie interne du rebord 49 du moyeu de rotor métallique et à la butée axiale 51 de l'arbre intermédiaire 6 présentant pour ce faire des ouvertures en correspondance avec celles de la butée 51. Cette butée est de forme annulaire et pourra consister en une collerette de faible diamètre. La portée de centrage 50 de l'arbre 6 est en contact intime avec la périphérie interne du rebord 49 du moyeu afin de garantir un entrefer entre le rotor 5 et le stator 11. Il en est de même dans les figures 2 et 3. Dans ces figures le rebord 49 présente des ouvertures en regard d'ouvertures présentent dans la butée pour assemblage du rebord à la butée 51 par exemple à l'aide de rivets. L'amortisseur 8 est dans tous les cas imperdable car il est fixé au moyeu 48 du rotor 5 à l'arrière de l'arbre 6, dont l'extrémité avant traverse le dispositif de débrayage concentrique 3 pour venir en prise avec le moyeu de l'embrayage 9 par exemple par une liaison à cannelures. L'anneau 37 rend imperdable le dispositif 3 avant montage du module hybride 2 sur le carter du moteur thermique du véhicule.

D'une manière générale on peut utiliser, des vis, des rivets ou des boulons ou autre pour fixer le flasque 63 aux rondelles 82, 83 et pour fixer le rebord 49 et/ou la périphérie interne de la rondelle 83 à la butée 51.

Le décalage vers l'arrière du flasque 63 métallique (Figures 2 et 3) et de la périphérie interne de la rondelle de guidage métallique 83 par rapport à l'extrémité arrière du rotor permet de diminuer les fuites magnétiques.

Comme visible dans les figures 1 à 3 le voile 27 présente un décalage axial vers l'avant à sa périphérie externe pour logement des bobines du stator 11.

## Revendications

1. Ensemble de transmission (1) pour véhicule automobile, destiné à être disposé entre un moteur thermique (52) et une boîte de vitesses (53), ledit ensemble comprenant :
- une machine électrique (4) tournante comportant un stator (11) externe présentant un corps et un rotor (5) interne ;
- un embrayage à friction à sec (9) comportant un mécanisme d'embrayage (91) et un disque de friction (93),
- un volant moteur (7) destiné à être fixé sur le vilebrequin du moteur thermique (52) et configuré pour former un plateau de réaction (92) de l'embrayage à sec (9);
- un arbre intermédiaire (6) couplant en rotation le disque de friction (93) de l'embrayage à friction à sec (9) et le rotor (5) de la machine électrique (4) ; et **caractérisé par**
- un élément de support (10), monobloc, destiné à assurer la fixation de l'ensemble de transmission sur un carter de la boîte de vitesses (53) et sur un carter du moteur thermique (52), et coiffant l'embrayage à friction à sec (9), l'élément de support (10) coopérant avec le corps du stator (5) par un ajustement serré et présentant un circuit de refroidissement pour refroidir le stator (11) comportant un conduit annulaire (55, 26) associé à des orifices d'entrée (24, 65) et de sortie (25, 66) et présentant une section entourée par la matière de l'élément de support (10).

2. Ensemble de transmission selon la revendication 1, dans lequel l'élément de support (10) est une pièce moulée et dans lequel le conduit annulaire (55) est noyé dans la masse de l'élément de support (10) et formé par moulage à modèle perdue.

3. Ensemble de transmission selon la revendication 2, dans lequel le conduit annulaire est un tube (26) et dans lequel l'élément de support (10) est surmoulé sur ledit tube (26).

4. Ensemble de transmission selon l'une quelconque des revendications 1 à 3, dans lequel le corps du stator (11) comporte un paquet de tôles fixé par frettage sur l'élément de support (10).

5. Ensemble de transmission selon l'une quelconque des revendications 1 à 4, dans lequel l'élément de support (10) est réalisé en aluminium ou en alliage à base d'aluminium.

6. Ensemble de transmission selon l'une quelconque des revendications 1 à 5, dans lequel l'élément de support (10) comporte un voile interne (27) de séparation entre la machine électrique (4) et l'embrayage à friction (9) et en ce que le voile (27) présente à son extrémité interne un manchon axial (28) pénétrant à l'intérieur du rotor (5) de la machine électrique (4).

7. Ensemble de transmission selon la revendication 6, comprenant un dispositif de débrayage (3) de l'embrayage à friction (9) monté en partie à l'intérieur du manchon axial (28).

8. Ensemble de transmission selon l'une quelconque des revendications 1 à 7, comportant en outre un amortisseur de torsion (8) qui est, d'une part, configuré pour être, lié en rotation à l'arbre d'entrée (54) de la boîte de vitesses (53), en sortie de l'amortisseur de torsion (8), et d'autre part, couplé en rotation au rotor (5) de la machine électrique (4).

9. Ensemble de transmission selon l'une quelconque des revendications 1 à 8, comportant un moyeu de support du rotor (48) d'une part, fixé à l'extrémité arrière de l'arbre intermédiaire (6) et, d'autre part, à l'amortisseur de torsion (8).

10. Ensemble de transmission selon l'une quelconque des revendications 1 à 9, dans lequel un volant moteur est un double volant amortisseur (7) comportant un organe primaire et un organe secondaire coaxiaux mobiles en rotation l'un par rapport à l'autre et couplé par des moyens d'amortissement.

## Patentansprüche

1. Getriebeanordnung (1) für ein Kraftfahrzeug, die dazu bestimmt ist, zwischen einem Verbrennungsmotor (52) und einem Schaltgetriebe (53) angeordnet zu werden, wobei die Anordnung aufweist:
- eine rotierende elektrische Maschine (4), die einen Außenstator (11) aufweist, der einen Körper und einen Innenrotor (5) aufweist;
- eine Trockenreibungskupplung (9), die einen Kupplungsmechanismus (91) und eine Reibscheibe (93) aufweist,
- ein Schwungrad (7), das dazu bestimmt ist, auf der Kurbelwelle des Verbrennungsmotors (52) befestigt zu werden und konfiguriert ist, um eine Gegendruckplatte (92) der Trockenkupplung (9) zu bilden;
- eine Zwischenwelle (6), die die Reibscheibe (93) der Trockenreibungskupplung (9) und den Rotor (5) der elektrischen Maschine (4) drehverbindet;
und **gekennzeichnet ist durch**
- ein einteiliges Trägerelement (10), das dazu bestimmt ist, das Befestigen der Getriebeanordnung an einem Gehäuse des Schaltgetriebes (53) und an einem Gehäuse des Verbrennungsmotors (52) zu gewährleisten und das die Trockenreibungskupplung (9) bedeckt, wobei das Trägerelement (10) mit dem Körper des Statorkörpers (5) über eine Presspassung zusammenwirkt und einen Kühlkreislauf zum Kühlen des Stators (11) aufweist, der eine ringförmige Leitung (55, 26) aufweist, die mit Einlass- (24, 65) und Auslassöffnungen (25, 66) verbunden ist und einen Abschnitt aufweist, der von dem Material des Trägerelements (10) umgeben ist.

2. Getriebeanordnung nach Anspruch 1, wobei das Trägerelement (10) ein Formteil ist und wobei die ringförmige Leitung (55) in der Masse des Trägerelements (10) eingebettet ist und durch Gießen mit verlorenen Modellen geformt ist.

3. Getriebeanordnung nach Anspruch 2, wobei die ringförmige Leitung ein Rohr (26) ist und wobei das Trägerelement (10) auf das Rohr (26) aufgeformt ist.

4. Getriebeanordnung nach einem der Ansprüche 1 bis 3, wobei der Körper des Stators (11) ein Blechpaket aufweist, das durch Aufschrumpfen auf dem Trägerelement (10) befestigt ist.

5. Getriebeanordnung nach einem der Ansprüche 1 bis 4, wobei das Trägerelement (10) aus Aluminium oder aus Legierung auf Aluminium-Basis hergestellt ist.

6. Getriebeanordnung nach einem der Ansprüche 1 bis 5, wobei das Trägerelement (10) einen inneren Trennflansch (27) zwischen der elektrischen Maschine (4) und der Reibungskupplung (9) aufweist und, dass der Flansch (27) an seinem inneren Ende eine axiale Hülse (28) aufweist, die in das Innere des Rotors (5) der elektrischen Maschine (4) eindringt.

7. Getriebeanordnung nach Anspruch 6, umfassend eine Ausrückvorrichtung (3) der Reibungskupplung (9), die teilweise im Innern der axialen Hülse (28) befestigt ist.

8. Getriebeanordnung nach einem der Ansprüche 1 bis 7, ferner umfassend einen Torsionsdämpfer (8), der einerseits konfiguriert ist, um mit der Eingangswelle (54) des Schaltgetriebes (53) am Ausgang des Torsionsdämpfers (8) drehverbunden zu werden, und andererseits mit dem Rotor (5) der elektrischen Maschine (4) drehverbunden ist.

9. Getriebeanordnung nach einem der Ansprüche 1 bis 8, umfassend eine Tragnabe des Rotors (48), die einerseits an dem hinteren Ende der Zwischenwelle (6) und andererseits an dem Torsionsdämpfer (8) befestigt ist.

10. Getriebeanordnung nach einem der Ansprüche 1 bis 9, wobei ein Schwungrad ein Doppelschwungraddämpfer (7) ist, der ein Primärorgan und ein Sekundärorgan aufweist, die koaxial relativ zueinander drehbeweglich sind, und durch Dämpfungsmittel verbunden ist.

## Claims

1. Motor vehicle transmission assembly (1) intended to be arranged between a combustion engine (52) and a gearbox (53), the said assembly comprising:
- a rotating electric machine (4) comprising an outer stator (11) having a body and an inner rotor (5) ;
- a dry friction clutch (9) comprising a clutch mechanism (91) and a friction disc (93),
- an engine flywheel (7) intended to be fixed to the crankshaft of the combustion engine (52) and configured to form a reaction plate (92) of the dry clutch (9);
- an intermediate shaft (6) rotationally coupling the friction disc (93) of the dry friction clutch (9) and the rotor (5) of the electric machine (4); and
**characterized by**
- a monobloc support element (10) intended to fix the transmission assembly to a case of the gearbox (53) and to a case of the combustion engine (52), and covering the dry friction clutch (9), the support element (10) engaging with the body of the stator (5) by way of a tight fit and having a cooling circuit for cooling the stator (11) comprising an annular duct (55, 26) combined with inlet (24, 65) and outlet (25, 66) orifices and having a section surrounded by the material of the support element (10).

2. Transmission assembly according to Claim 1, in which the support element (10) is a moulded part and in which the annular duct (55) is embedded in the mass of the support element (10) and formed by disposable-pattern moulding.

3. Transmission assembly according to Claim 2, in which the annular duct is a tube (26) and in which the support element (10) is overmoulded onto the said tube (26).

4. Transmission assembly according to any one of Claims 1 to 3, in which the body of the stator (11) comprises a pack of laminations which is fixed by shrink-fitting to the support element (10) .

5. Transmission assembly according to any one of Claims 1 to 4, in which the support element (10) is made of aluminium or of an aluminium-based alloy.

6. Transmission assembly according to any one of Claims 1 to 5, in which the support element (10) comprises an inner separating web (27) between the electric machine (4) and the friction clutch (9) and in that the web (27) has at its inner end an axial sleeve (28) penetrating inside the rotor (5) of the electric machine (4).

7. Transmission assembly according to Claim 6, comprising a device (3) for disengaging the friction clutch (9) that is mounted in part inside the axial sleeve (28).

8. Transmission assembly according to any one of Claims 1 to 7, additionally comprising a torsion damper (8) which is, on the one hand, configured to be rotationally connected to the input shaft (54) of the gearbox (53) at the outlet of the torsion damper (8), and, on the other hand, rotationally coupled to the rotor (5) of the electric machine (4).

9. Transmission assembly according to any one of Claims 1 to 8, comprising a hub (48) for supporting the rotor that is fixed, on the one hand, to the rear end of the intermediate shaft (6) and, on the other hand, to the torsion damper (8) .

10. Transmission assembly according to any one of Claims 1 to 9, in which an engine flywheel is a dual mass flywheel (7) comprising a primary member and a secondary member which are coaxial and rotatable with respect to one another and coupled by damping means.
